# EUROPEAN PATENT SPECIFICATION

(11) **EP 2 679 423 B1**
(45) Date of publication and mention of the grant of the patent: **03.12.2014**
(21) Application number: 13174134.0
(22) Date of filing: 27.06.2013
(51) Int. Cl.: B60J 7/06, B60J 7/10, F16B 21/18

(54) **Carriage for a roof of a trailer or truck**
Gestell für ein Dach eines Anhängers oder Lastkraftwagens
Chariot pour le toit d'une remorque ou d'un camion

(30) Priority: 29.06.2012 BE 201200447
(43) Date of publication of application: 01.01.2014
(73) Proprietor: Versus-Invest, 3660 Opglabbeek (BE)
(72) Inventor: Rogiers, Erik, 3850 Kozen (BE)
(74) Representative: Van Reet, Joseph

(56) References cited:
- EP-A1- 2 218 602
- DE-A1- 3 209 284
- US-A1- 2005 207 866

## Description

The present invention relates to a carriage for a sliding roof of a trailer or truck. Such a roof is formed by a roof fabric ; roof sticks for supporting the roof fabric, the roof sticks being provided at both ends with a carriage with at least two substantially vertical running wheels and at least one substantially horizontal running wheel ; and by roof profiles with a first rail for the vertical running wheels of the carriages and with a second rail for the horizontal running wheels of the carriages.

The carriage itself comprises a frame with a substantially vertical portion and a substantially horizontal portion which is provided to be mounted on an end of one of said roof sticks. The outside of said frame is provided for supporting the roof fabric. The carriage comprises at least two of said vertical running wheels being mounted on the vertical portion of the frame, on the inside thereof, and furthermore at least one of said horizontal running wheels being mounted on the horizontal portion of the frame, also on the inside thereof.

The roof fabric has a downwardly folded edge that fits against the carriage. For securing the roof fabric, through an opening in said edge, to the carriage, said carriage is further provided with securing means which, on the one hand, comprise first fastening means, and on the other hand, second fastening means being able to be locked in said first fastening for securing the roof fabric. The first or the second fastening means are fastened to the vertical portion of the frame of the carriage in order to simplify the fastening of the roof fabric of the other fastening means.

The securing means should, above all, provide a reliable fastening of the roof fabric to the carriages. During driving, the roof fabric may not loosen under any circumstances. Furthermore, it is also important that these securing means cannot be opened or closed to prohibit an unwanted access to the trailer or truck.

Especially when the trailer or truck is sealed before the transport, in particular by the customs in international transports, it is also required that, if someone had unwanted access to the trailer, for example for storing contraband such as drugs, this can be determined afterwards. In Europe, for example, the T.I.R. Convention (Transport International de Marchandises par la Route) exists. This Convention applies to the transport of goods originating from, or destined for, a non- EU Member State that has ratified the convention. Most European countries and some countries in the Middle East have acceded to said convention. It aims to simplify and harmonize the administrative formalities of international road transportation.

The indication T.I.R. is often found on trucks. These trucks are equipped with a seal, applied by the customs, that cannot be broken. Breaking it is a criminal offence. Once the seal has been applied, only the customs may conduct inspections. The vehicles should be constructed such that no goods can be loaded or unloaded without leaving obvious traces of tampering or without breaking the seals applied by the customs.

In practice, roof covers are fastened, for example by means of blind rivets on the carriages. Such blind rivets can be bored out and replaced with new rivets. Such a fastening is not allowed according the T.I.R. convention.

Another system which is applied in practice, comprises a pin that protrudes from the outside of the carriage and that is welded on the inside thereof. Hence, the pin itself can no longer be replaced. However, the locking takes place on the outside by means of a small cap which is snapped onto the end of the pin. However, it is difficult to correctly apply such a small cap as it is often kept slightly slanted and is thus not properly locked into place.

In a further system which is used in practice, the first fastening means comprises a plastic sleeve which is fastened on the inside of the frame of the carriage in an opening therein, and which is provided with a longitudinal gap such that the sleeve can open up and can snap into place around a pin which is pressed in said sleeve from the outside of the carriage. However, the presence of such a gap has the disadvantage that it is possible, through said gap, to pry open the sleeve, such that the pin can be pulled out of the sleeve. Such a system is, for example, described in EP 2 218 602 B1. In said European patent is also further indicated the possibility to fasten the pin on the back with a dish spring, snapped onto the pin. However, the application of such a spring is not so simple and is not possible when the carriage is already on the roof profile. In other words, the fabric should be attached to the carriage before the carriage is mounted in the roof profile. The mounting of the carriages onto the roof profile is significantly complicated by the weight and the volume of the fabric, attached to the carriages.

To this end, the object of the invention is to provide a new carriage that does not exhibits these disadvantages and that allows fastening the roof fabric of a trailer or truck in a simple and reliable way to the carriage, when said carriage is already in the roof profile, such that removing the roof fabric of the trailer or truck and re-attaching it without leaving any traces, is prohibited.

To this end, the carriage according to the invention is characterized **in that** the first fastening means comprise a metal sleeve and a metal spring, locked into said metal sleeve and formed by a spring wire, folded in the shape of a hairpin, which hairpin is folded in a U-shape, wherein the spring wire at the location of the base of the U-shape forms an annular portion which can be opened by applying pressure, and further in that said second fastening means comprise a metal pin having a first end which exhibits a head, and a second end which is conically shaped, wherein the pin between both ends is provided with at least one circumferential groove, and wherein the pin is provided to be pressed, with its conically shaped second end, into said sleeve, through the annular portion of the metal spring, such that the conically shaped end opens the annular portion of the metal spring by pressure, wherein said annular portion of the spring is provided to further slide over the pin and to lock into place into the circumferential groove of the pin in order to prevent the pin from being pulled back out of the sleeve.

Because the spring is held in a metal sleeve, it is easy to always correctly press the pin with its conical end into said spring, partly because the sleeve provides for a guiding of the pin. The snapping into place of the metal spring in the circumferential groove of the metal pin ensures that the pin cannot be pulled back from the spring The spring itself is in the mounted position not in any way accessible because it is fully incorporated into the closed sleeve. Completely boring out the pin or the sleeve, and replacing said pin or said sleeve with a new one, is not possible because the pin is not fixedly attached to the sleeve or to the spring, or because the sleeve is not fixedly attached to the pin, and will thus rotate together with the drill.

The spring according to the invention is formed by a spring wire, folded in the form of a hairpin, which is further folded in a U-shape, wherein the base of the U-shaped folded hairpin shape forms an annular portion which can be opened by applying pressure. Such a spring, formed from a spring wire, can be easily manufactured. The particular design offers the advantage that the annular portion of the spring can be easily be held in the correct place in the sleeve, whereas said annular portion still offers the possibility to open up upon insertion of the pin. Both legs of the U-shaped folded hairpin shape may indeed rest against the inside of the sleeve, wherein the annular portion of the spring can still open up. The hairpin-shaped folded wire spring can be blocked at a well-defined position in the longitudinal direction of the sleeve, for example by means of a cover with which the rear of the sleeve is closed off, such that it cannot form a source of clearance of the pin in the sleeve. By using such a spring, the roof fabric can thus substantially without clearance be fastened against the outside of the carriage, i.e. when the carriages have already been mounted in the roof profiles. Owing to the shape of the spring, only a relatively small force is required to lock the metal pin in the spring into place, making it easy for the metal pin to always correctly snap into the sleeve.

In a preferred embodiment of the carriage according to the invention, the first attachment means, in particular the metal sleeve thereof, is attached to the vertical portion of the frame of the carriage. In this way, the roof fabric can easily be fastened by pressing the metal pin into the metal sleeve of the second fastening means, through the opening in the roof fabric.

In an alternative embodiment, the second fastening means, in particular, the metal pin thereof, can be attached to the vertical portion of the frame of the carriage. In this embodiment, the roof fabric can be simply attached to the carriage by fastening the roof fabric with one of its openings over the protruding metal pin and by subsequently snapping the metal sleeve of the first fastening means onto the metal pin.

Further advantages and particularities of the invention will become apparent from the following description of a preferred embodiment of a carriage according to the invention. However, this description is only given as an example and is not intended to limit the scope of protection as defined by the claims. The reference numerals indicated in the description relate to the annexed drawings, wherein:
Figure 1 shows a perspective view showing a portion of the roof of a trailer with a roof rail, a carriage mounted thereon and a roof fabric attached thereon;
Figure 2 shows the same view as Figure 1, wherein, however, the roof fabric of the carriage has been removed;
Figure 3 shows a perspective view on the bottom side of the carriage from the previous figures ;
Figure 4 shows, on a larger scale but also in perspective, an exploded view of the first attachment means which are provided on the inside of the carriage for fastening the roof fabric;
Figure 5 shows a cross-section through the part of the roof, shown in Figures 1 to 3, at the location of the first fastening means, wherein, for the sake of clarity, not all the cross sections have been hatched ;
Figure 5A shows, on a larger scale, a detail of Figure 5, in particular, of the first fastening means and the second fastening means with which the roof fabric is fixed on the carriage ; and
Figure 6 is a detailed view, such as in Figure 5A, but on an alternative embodiment of the first and second fastening means.

The present invention generally relates to a carriage 1 for a sliding roof of a trailer or truck. As in practice it usually concerns trailers, in the following description only reference is made to trailers. However, it will be understood, that this description also applies to sliding roofs of trucks as these are identical to those of trailers.

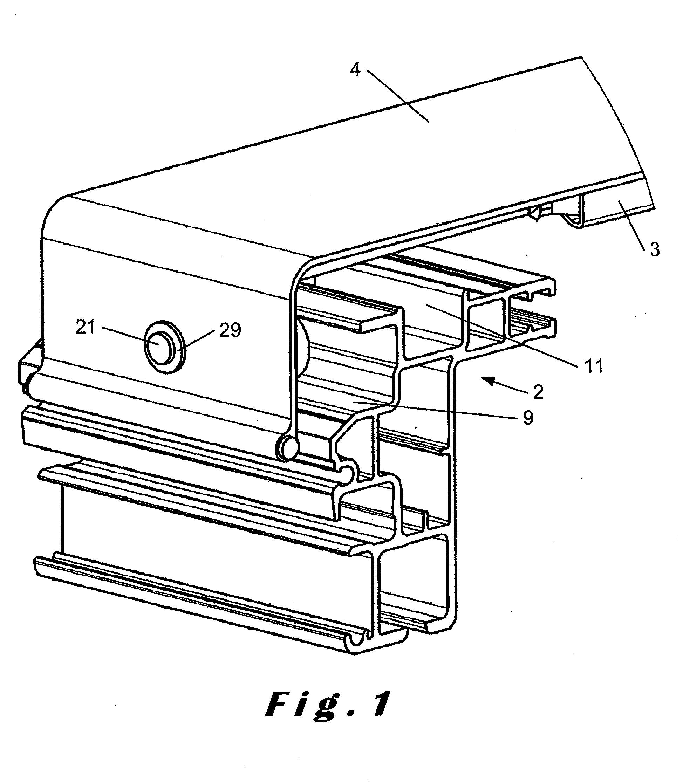

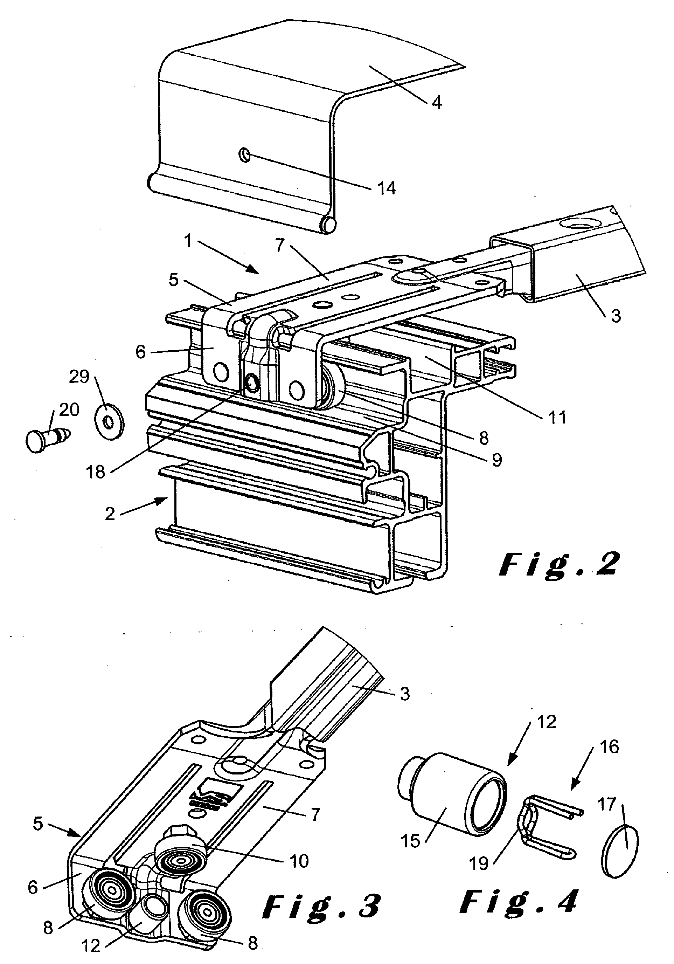

In Figures 1 and 2, a part of such a sliding roof is shown. The sliding roof comprises firstly two roof profiles 2 with two rails for the carriages 1. The carriages 1 are attached the one to each other in the transverse direction of the trailer by means of two roof sticks 3. In the longitudinal direction of the trailer, the successive carriages 1 are typically also attached to each other, usually by plates that can fold in the middle and which ensure that also the roof fabric 4, supported by these plates, the carriages 1 and the roof sticks 3 are properly folded when opening the sliding roof. These foldable plates or other folding mechanisms are well known per se and have not been shown in the figures.

The carriages 1 have a metal frame 5, which is usually made of a metal plate, and which exhibits a substantially vertical portion 6 and a substantially horizontal portion 7 (on which the end of one of the roof sticks 3 is installed). The frame 5 has an outside which is provided for supporting the roof fabric 4 and an oppositely located inner side. On the inside of the vertical portion 6 of the frame 5, two vertical running wheels 8 are mounted in series. These vertical running wheels 8 both run in a first rail 9 of the roof profile support 2 and support the carriage 1. In order to keep the distance between the roof profiles 2 constant, and in order to avoid that the vertical running wheels 8 do not remain in the rail 9, on the inside of the horizontal portion 7 of the frame 5, an horizontal running wheel 10 is mounted, Said horizontal running wheel 10 runs in a second rail 11 of the roof profile wherein it is mounted between two vertical faces of said rail 11. The horizontal running wheel 11 thus prevents a displacement of the carriage 1 in a direction, transverse to the roof profile 2.

The invention now relates in particular to the securing means which are provided on the carriage 1 for securing the roof fabric 4 thereon. In the embodiment, shown in Figures 1 to 5A these securing means comprise, on the one hand, first fastening means 12, fastened on the inside of the frame 5 against the vertical portion 6 thereof, and, on the other hand, second fastening means 20 which are able to be locked in the first fastening means 12 through an opening 14 in the downwardly folded edge of the roof fabric 4.

As can be clearly seen in Figure 4, the first fastening means 12 comprise a metal sleeve 15, which is attached on the inside of the frame 5, on the vertical portion 6 thereof, and a metal spring 16, which is locked in that metal sleeve 15 and which exhibits an annular portion 19 that can be opened by applying pressure. For enclosing the spring 16, the rear side of the metal sleeve 15 is closed off by means of a cover 17. Said cover 17 may be screwed or welded onto the sleeve 15, but preference is given to a cover 17 that is folded onto the sleeve.

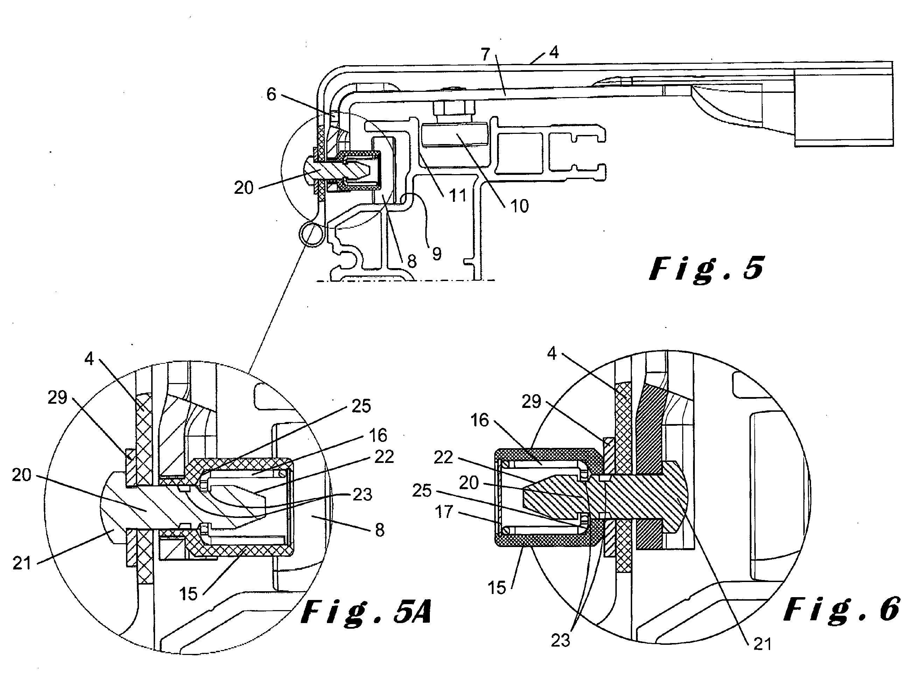

The sleeve 15 is fastened in a opening 18 in the vertical portion 6 of the frame 5. This can be done by screwing a thinned end of said sleeve 15 into said opening 18, as is shown in Figure 5A, or by folding said end into said opening 18. Other ways of fastening are also possible, such as welding or riveting of the sleeve 15 in the opening 18.

The second fastening means comprise a metal pin 20. A first end of said pin 20 exhibits a head 21 while a second end 22 of the pin 20 is conically shaped. Between both ends, the pin 20 is provided with at least one circumferential groove 23. The pin 20 is provided to be pressed, with its conically shaped end 22, into the sleeve 15, through the annular portion 19 of the metal spring 16. In doing so, said annular portion 19 is pressed open by the conically shaped end 22 of the pin 20. In order to lock the roof fabric 4, the pin 20 is then to be pressed further into the sleeve 15 until the circumferential groove 23 in the pin 20 is at the level of the annular portion 19 of the spring 16, such that said annular portion 19 locks into place in the circumferential groove 23 of the pin 20. From that moment on, it is not possible anymore to withdraw the pin 20 from the sleeve 15 and hence, the tarpaulin 4 is locked to the carriage 1.

According to the invention, the metal spring 16 is formed by a spring wire (see in particular Figure 4). Said spring wire is first bent into the shape of a hairpin, hence having a hairpin bend in the middle. Said hairpin shape is then further folded in a U-shape, wherein the base of the U-shape forms the annular portion 19 of the spring 16, which is provided to lock into place in the circumferential groove 23 of the pin 20.

The thus folded spring 16 is inserted through the rear end of the sleeve 15 into said sleeve, with the annular portion 19 of the spring 16 directed to the front. The spring 16 is folded in such a way that both legs 24 of the spring rest against the inside of the sleeve 15, wherein preferably the free ends of both legs 24 are clamped in said sleeve 15. At the location of the annular portion of the spring, the diameter of the spring is a bit smaller such that said annular portion 19 can open up when the pin 20 is pushed therein.

The cover 17 that closes off the rear end of the sleeve 15, preferably presses against the spring 16, in particular against the free ends of the legs 24 thereof, such that the spring is fixed in the axial direction into the sleeve 15. In this way, no clearance is created on the pin 20, inserted into the spring 16. At the front end of the sleeve 15, it shows an inwardly directed edge 25 against which the front side of the spring 16, in particular, the annular portion 19 thereof, rests. Said inwardly directed edge 25 is preferably slanted. In this way, it is obtained that, when on the pin 20, snapped into the spring 16, a tensile force is exerted, the annular portion 19 is not only drawn to the edge 25, but also that the slanted edge 25 firmly presses the annular portion 19 of the spring 16 even more firmly into the circumferential groove 23 of the pin. Hence, in this way, it is totally impossible to pull the pin 20 out of the sleeve 15. Due to the presence of the sleeve 15, it is also not possible for the annular portion 19 of the spring 16 to be opened by pressure.

Finally, an important feature of the pin 20 is that the circumferential groove 23 provided therein allows the pin 20 to rotate along its longitudinal axis, from the annular portion 19 of the spring 16, which is snapped into position in said groove 23. This is possible because the groove 23 is deep enough, or because the bottom thereof is rounded, and preferably is circular. If one would attempt to bore out the pin 20 from the carriage, in this way, the pin 20 will rotate together with the drill, such that boring out the pin 20 is impossible. It will not be possible to repair a damaged pin 20, of which, for example, the head 21 was grinded off in order to open the roof fabric 4, to replace it with a new pin 20.

Finally, in Figure 5A, it can also be seen that a plurality of circumferential grooves 23 can be provided in the pin 20. The edges of said circumferential grooves 23 which are located on the side of the conically shaped end 22 of the pin 20, are preferably straight, in order to prevent that the pin 20 can be pulled back out of the spring 16, while the edges of these grooves 23, which are situated at the side of the head 21 of the pin 20, are preferably slanted. In this way, the pin 20, even if the annular portion 19 of the spring 16 is already in one of the first circumferential grooves 22, can be further pressed into the spring 16 until the annular portion 19 of the spring 16 is snapped into a subsequent circumferential groove 23, which is located closer to the head 21 of the pin 20. In this way, it is thus always possible for the roof fabric 4 to be clamped between the head 21 of the pin 20 and the side of the carriage 1.

In the figures, in the roof fabric 4 only one opening 14 for the pin 20 is provided. To prevent fraying or tearing of the roof fabric 4 at said opening 14, it is in practice further reinforced with a metal ring. Furthermore, a simple, flat washer 29 is placed between the head 21 of the pin 20 and the roof fabric 4. If necessary, it may be formed in a more complex way, and it can, for instance, partially extend into the opening in the roof fabric to further reduce the risk of tearing.

In Figure 6, an alternative embodiment of the first and second attachment means is shown. Per se, the first and second fastening means are substantially identical to those of the first embodiment. Hence, the first fastening means also comprise the metal sleeve 15 with the metal spring 16 enclosed therein. The sleeve 15 has been re-closed by means of a cover 17 which is preferably welded or folded on the sleeve 15. The second fastening means comprise the metal pin 20 with the head 21 at one end, and the conically shaped end 22 at the other end. Between both ends, the pin 20 is provided with one or more circumferential grooves 23. The pin 20 is provided in order to be pressed with its conically shaped end 22 into the sleeve 15, through the annular portion 19 of the metal spring 16.

The difference with the first embodiment is that in the embodiment according to Figure 6, not the first, but the second fastening means, more in particular the metal pin 20, is secured to the vertical portion 6 of the frame 5 of the carriage, more specifically, again in a opening in the vertical section 6. The metal pin 20 may screwed, welded, folded or riveted into said opening. Preferably, the pin 20 is welded with its head 21 against the vertical portion 6.

The metal pin 20 extends on the front of the carriage in such a way that the roof fabric 4 can be simple attached with one of its openings 14 over the protruding pin 20. For fastening the roof fabric 4, only the sleeve 15 containing the spring 16 therein, should be snapped onto the pin 20. Due to the special design of the spring 16 as described above, this can be done in a simple and reliable way. Because the sleeve 15 in said embodiment does not need to be mounted on the carriage itself, the thinned portion of the sleeve, with which it was fastened in the opening, is omitted. The sleeve 15 serves only to keep the roof fabric pressed against the carriage.

## Claims

1. Carriage for a sliding roof of a trailer or truck having :
- a roof fabric (4);
- roof sticks (3) for supporting the roof fabric, the roof sticks being provided at both ends with a carriage (1) with at least two substantially vertical running wheels (8) and at least one substantially horizontal running wheel (10) ; and
- roof profiles (2) with a first rail (9) for the vertical running wheels (8) of the carriages (1) and with a second rail (11) for the horizontal running wheels (10) of the carriages,
wherein said carriage comprises
- a frame (5) with a substantially vertical portion (6) and a substantially horizontal portion (7), the frame having an outside provided for supporting said roof fabric (4), and an inside located opposite of said outside, wherein the horizontal portion (7) of the frame (5) is provided to be mounted on one end of one of said roof sticks (3) ;
- at least two of said vertical running wheels (8) being mounted on the vertical portion (6) of the frame (5), on the inside thereof,
- at least one of said horizontal running wheels (10) being mounted on the horizontal portion (7) of the frame (5), also on the inside thereof; and
- securing means for securing the roof fabric (4), through an opening (14) in the downwardly folded edge of the roof fabric (4), to the carriage (1), the securing means having first fastening means (12), and second fastening means (20) being able to be locked in said first fastening means (12) for securing the roof fabric (4), wherein said first (12) or said second fastening means (20) are fastened to the vertical portion (6) of the frame (5) **characterized in that**
- said first fastening means (12) comprise a metal sleeve (15) and a metal spring (16), locked into said metal sleeve (15) and formed by a spring wire, folded in the shape of a hairpin, which hairpin shape is further folded into a U-shape, wherein the base of the U-shaped folded hairpin shape forms an annular portion (19) which can be opened by applying pressure, and
- said second fastening means comprise a metal pin (20) having a first end which exhibits a head (21), and a second end (22) which is conically shaped, wherein the pin (20) between both ends is provided with at least one circumferential groove (23), and wherein the pin is provided to be pressed, with its conically shaped second end (22), into said sleeve (15), through the annular portion (19) of the metal spring (16), such that the conically shaped end (22) opens the annular portion (19) of the metal spring (16) by pressure, wherein said annular portion (19) of the spring (16) is provided to further slide over the pin (20) and to lock into place into the circumferential groove (23) of the pin (20) in order to prevent the pin (20) from being pulled back out of the sleeve (15).

2. Carriage according to claim 1, **characterized in that** the pin comprises at least two circumferential grooves, wherein at least the circumferential groove which is located closest to the conically shaped second end of the pin exhibits one slanted side, such that the pin can be pushed further into the annular portion of the spring until said annular portion of the spring locks into place in the subsequent circumferential groove.

3. Carriage according to claim 1 or 2, **characterized in that** the two legs of the U-shaped folded hairpin shape rest against the inside of the sleeve.

4. Carriage according to any one of the claims 1 to 3, **characterized in that** the annular portion of the spring rests against an inwardly directed edge of the sleeve while at least one of the legs of the U-shaped folded hairpin shape rests against a cover, closing off the sleeve on the other side.

5. Carriage according to claim 4, **characterized in that** said inwardly directed edge of the sleeve is slanted in order to press the annular portion of the spring in the circumferential groove of the pin, when that pin is subjected to a pulling force in the locked position of the pin.

6. Carriage according to any one of the claims 1 to 5, **characterized in that** the circumferential groove in the pin is provided to allow the pin rotating on its longitudinal axis, when the annular portion of the spring is locked into place in said groove.

7. Carriage according to any one of the claims 1 to 6, **characterized in that** said first fastening means (12) are fastened to the vertical portion (6) of the frame (5).

8. Carriage according to claim 7, **characterized in that** the metal sleeve (15) of the first fastening means (12) is fastened on the inside of the frame (5), on the vertical portion (6) thereof.

9. Carriage according to claim 8, **characterized in that** said sleeve is fastened in a opening in the vertical portion of the frame of the carriage.

10. Carriage according to claim 9, **characterized in that** said sleeve is screwed, welded, folded or riveted into said opening.

11. Carriage according to any one of the claims 7 to 10, **characterized in that** said second fastening means (20) can be locked in said first fastening means (12) through an opening (14) in the downwardly folded edge of the roof fabric (4) for securing the roof fabric (4).

12. Carriage according to any one of the claims 1 to 6, **characterized in that** the metal pin (20) of said second fastening means is fastened to the vertical portion (6) of the frame (5).

13. Carriage according to claim 12, **characterized in that** said metal pin (20) is fastened into an opening in the vertical portion (6) of the frame (5) of the carriage.

14. Carriage according to claim 13, **characterized in that** said metal pin (20) is screwed, welded, folded or riveted into said opening.

## Patentansprüche

1. Gestell für ein gleitendes Dach eines Anhängers oder Lastkraftwagens mit:
- einem Dachgewebe (4);
- Dachstreben (3) zur Unterstützung des Dachgewebes, wobei die Dachstreben an beiden Enden mit einem Gestell (1) mit zumindest zwei im Wesentlichen vertikalen Laufrädern (8) und zumindest einem im wesentlichen horizontalen Laufrad (10) versehen sind; und
- Dachprofile (2) mit einer ersten Schiene (9) für die vertikalen Laufräder (8) der Gestelle (1) und mit einer zweiten Schiene (11) für die horizontalen Laufräder (10) der Gestelle,
wobei das erwähnte Gestell Folgendes umfasst:
- einen Rahmen (5) mit einem im Wesentlichen vertikalen Abschnitt (6) und einem im Wesentlichen horizontalen Abschnitt (7), wobei der Rahmen eine Außenseite zur Unterstützung des erwähnten Dachgewebes (4) und eine Innenseite gegenüber der erwähnten Außenseite hat, wobei der horizontale Abschnitt (7) des Rahmens (5) vorgesehen ist, um an einem Ende einer der erwähnten Dachstreben (3) befestigt zu werden;
- wobei zumindest zwei der erwähnten vertikalen Laufräder (8) am vertikalen Abschnitt (6) des Rahmens (5), an dessen Innenseite, montiert sind,
- wobei zumindest eines der erwähnten horizontalen Laufräder (10) am horizontalen Abschnitt (7) des Rahmens (5), auch an dessen Innenseite, montiert sind; und
- Sicherungsmittel zur Sicherung des Dachgewebes (4), durch eine Öffnung (14) im nach unten gefalteten Rand des Dachgewebes (4), am Gestell (1), wobei die Sicherungsmittel erste Befestigungsmittel (12) und zweite Befestigungsmittel (20) haben, die in den erwähnten ersten Befestigungsmitteln (12) blockiert werden können, um das Dachgewebe (4) zu sichern, wobei die erwähnten ersten (12) oder die erwähnten zweiten (20) Befestigungsmittel am vertikalen Abschnitt (6) des Rahmens (5) befestigt sind,
**dadurch gekennzeichnet, dass**
- die erwähnten ersten Befestigungsmittel (12) eine Metallhülse (15) und eine Metallfeder (16) umfassen, welche in der erwähnten Metallhülse (15) blockiert ist und durch einen Federdraht geformt ist, gefaltet in der Form einer Haarnadel, wobei die Haarnadelform weiter in eine U-Form gefaltet ist, wobei die Basis der U-förmig gefalteten Haarnadelform einen ringförmigen Abschnitt (19) formt, der durch Anwenden von Druck geöffnet werden kann, und
- die erwähnten zweiten Befestigungsmittel einen Metallstift (20) mit einem ersten Ende, welches einen Kopf (21) aufweist, und einem zweiten Ende (22), welches konisch geformt ist, umfassen, wobei der Stift (20) zwischen beiden Ende mit zumindest einer umlaufenden Nut (23) versehen ist, und wobei der Stift vorgesehen ist, um mit seinem konisch geformten zweiten Ende (22) durch den ringförmigen Abschnitt (19) der Metallfeder (16) in die erwähnte Hülse (15) gedrückt zu werden, sodass das konisch geformte Ende (22) den ringförmigen Abschnitt (19) der Metallfeder (16) durch Druck öffnet, wobei der erwähnte ringförmige Abschnitt (19) der Feder (16) vorgesehen ist, um weiter über den Stift (20) zu gleiten und in die umlaufende Nut (23) des Stifts (20) einzurasten, um zu verhindern, dass der Stift (20) wieder aus der Hülse (15) herausgezogen wird.

2. Gestell nach Anspruch 1, **dadurch gekennzeichnet, dass** der Stift zumindest zwei umlaufende Nuten umfasst, wobei zumindest die umlaufende Nut, die sich am dichtesten beim konisch geformten zweiten Ende des Stifts befindet, eine abgeschrägte Seite aufweist, sodass der Stift weiter in den ringförmigen Abschnitt der Feder gedrückt werden kann, bis der erwähnte ringförmige Abschnitt der Feder in der nachfolgenden umlaufenden Nut einrastet.

3. Gestell nach Anspruch 1 oder 2, **dadurch gekennzeichnet, dass** die zwei Beine der U-förmig gefalteten Haarnadelform an der Innenseite der Hülse anliegen.

4. Gestell nach irgendeinem der Ansprüche 1 bis 3, **dadurch gekennzeichnet, dass** der ringförmige Abschnitt der Feder am nach innen gerichteten Rand der Hülse anliegt, während zumindest eines der Beine der U-förmig gefalteten Haarnadelform an einer Bedeckung anliegt, die die Hülse an der anderen Seite abschließt.

5. Gestell nach Anspruch 4, **dadurch gekennzeichnet, dass** der erwähnte nach innen gerichtete Rand der Hülse abgeschrägt ist, um den ringförmigen Abschnitt der Feder in die umlaufende Nut des Stifts zu drücken, wenn dieser Stift in der blockierten Position des Stifts einer ziehenden Kraft ausgesetzt wird.

6. Gestell nach irgendeinem der Ansprüche 1 bis 5, **dadurch gekennzeichnet, dass** die umlaufende Nut im Stift vorgesehen ist, um eine Drehbewegung des Stifts um seine Längsachse zuzulassen, wenn der ringförmige Abschnitt der Feder in der erwähnten Nut eingerastet ist.

7. Gestell nach irgendeinem der Ansprüche 1 bis 6, **dadurch gekennzeichnet, dass** die erwähnten ersten Befestigungsmittel (12) am vertikalen Abschnitt (6) des Rahmens (5) befestigt sind.

8. Gestell nach Anspruch 7, **dadurch gekennzeichnet, dass** die Metallhülse (15) der ersten Befestigungsmittel (12) an der Innenseite des Rahmens (5), an dessen vertikalem Abschnitt (6), befestigt ist.

9. Gestell nach Anspruch 8, **dadurch gekennzeichnet, dass** die erwähnte Hülse in einer Öffnung im vertikalen Abschnitt des Rahmens des Gestells befestigt ist.

10. Gestell nach Anspruch 9, **dadurch gekennzeichnet, dass** die erwähnte Hülse in die erwähnte Öffnung geschraubt, geschweißt, gefaltet oder genietet ist.

11. Gestell nach irgendeinem der Ansprüche 7 bis 10, **dadurch gekennzeichnet, dass** die erwähnten zweiten Befestigungsmittel (20) in den erwähnten ersten Befestigungsmitteln (12) durch eine Öffnung (14) im nach unten gefalteten Rand des Dachgewebes (4) blockiert werden können, um das Dachgewebe (4) zu sichern.

12. Gestell nach irgendeinem der Ansprüche 1 bis 6, **dadurch gekennzeichnet, dass** der Metallstift (20) der erwähnten zweiten Befestigungsmittel am vertikalen Abschnitt (6) des Rahmens (5) befestigt ist.

13. Gestell nach Anspruch 12, **dadurch gekennzeichnet, dass** der erwähnte Metallstift (20) in einer Öffnung im vertikalen Abschnitt des Rahmens (6) des Rahmens (5) des Gestells befestigt ist.

14. Gestell nach Anspruch 13, **dadurch gekennzeichnet, dass** der erwähnte Metallstift (20) in die erwähnte Öffnung geschraubt, geschweißt, gefaltet oder genietet ist.

## Revendications

1. Chariot pour un toit coulissant d'une remorque ou d'un camion ayant :
- une toile (4) de toit ;
- des traverses (3) de toit pour supporter la toile de toit, les traverses de toit étant pourvues aux deux extrémités d'un chariot (1) comprenant au moins deux roues de roulement (8) substantiellement verticales et au moins une roue de roulement (10) substantiellement horizontale ; et
- des profilés (2) de toit comprenant un premier rail (9) pour les roues de roulement verticales (8) des chariots (1) et un deuxième rail (11) pour les roues de roulement horizontales (10) des chariots,
ledit chariot comprenant :
- un cadre (5) comprenant une partie substantiellement verticale (6) et une partie substantiellement horizontale (7), le cadre ayant un extérieur prévu pour supporter ladite toile (4) de toit et un intérieur situé à l'opposé dudit extérieur, la partie horizontale (7) du cadre (5) étant prévue pour être montée sur une extrémité d'une desdites traverses (3) de toit ;
- au moins deux desdites roues de roulement verticales (8) étant montées sur la partie verticale (6) du cadre (5), sur l'intérieur de celle-ci,
- au moins une desdites roues de roulement horizontales (10) étant montée sur la partie horizontale (7) du cadre (5), également sur l'intérieur de celle-ci ; et
- des moyens d'arrimage pour arrimer la toile (4) de toit, à travers une ouverture (14) dans le bord plié vers le bas de la toile (4) de toit, au chariot (1), les moyens d'arrimage ayant des premiers moyens de fixation (12) et des deuxièmes moyens de fixation (20) capables d'être bloqués dans lesdits premiers moyens de fixation (12) pour arrimer la toile (4) de toit, lesdits premiers (12) ou lesdits deuxièmes moyens de fixation (20) étant fixés à la partie verticale (6) du cadre (5),
**caractérisé en ce que**
- lesdits premiers moyens de fixation (12) comprennent un manchon métallique (15) et un ressort métallique (16) bloqué dans ledit manchon métallique (15) et formé par un fil de ressort, plié dans la forme d'une épingle à cheveux, laquelle forme d'épingle à cheveux est en outre pliée en une forme de U, la base de la forme d'épingle à cheveux en forme de U formant une partie annulaire (19) qui peut être ouverte en appliquant une pression, et
- lesdits deuxièmes moyens de fixation comprennent une broche métallique (20) ayant une première extrémité qui présente une tête (21) et une deuxième extrémité (22) qui est de forme conique, la broche (20) étant pourvue entre les deux extrémités d'au moins une rainure circonférentielle (23), et la broche étant prévue pour être pressée avec sa deuxième extrémité (22) de forme conique dans ledit manchon (15) à travers la partie annulaire (19) du ressort métallique (16) de sorte que l'extrémité (22) de forme conique ouvre la partie annulaire (19) du ressort métallique (16) par pression, ladite partie annulaire (19) du ressort (16) étant prévue pour glisser en outre sur la broche (20) et pour se bloquer en place dans la rainure circonférentielle (23) de la broche (20) afin d'empêcher la broche (20) d'être retirée du manchon (15).

2. Chariot selon la revendication 1, **caractérisé en ce que** la broche comprend au moins deux rainures circonférentielles, au moins la rainure circonférentielle qui est située le plus près de la deuxième extrémité de forme conique de la broche présentant un côté incliné de sorte que la broche peut être poussée plus avant dans la partie annulaire du ressort jusqu'à ce que ladite partie annulaire du ressort se bloque en place dans la rainure circonférentielle suivante.

3. Chariot selon la revendication 1 ou 2, **caractérisé en ce que** les deux branches de la forme d'épingle à cheveux en forme de U repose contre l'intérieur du manchon.

4. Chariot selon l'une quelconque des revendications 1 à 3, **caractérisé en ce que** la partie annulaire du ressort repose contre un bord dirigé vers l'intérieur du manchon tandis qu'au moins une des branches de la forme d'épingle à cheveux pliée en forme de U repose contre un couvercle fermant le manchon de l'autre côté.

5. Chariot selon la revendication 4, **caractérisé en ce que** ledit bord dirigé vers l'intérieur du manchon est incliné afin de presser la partie annulaire du ressort dans la rainure circonférentielle de la broche quand la broche est soumise à une force de traction dans la position bloquée de la broche.

6. Chariot selon l'une quelconque des revendications 1 à 5, **caractérisé en ce que** la rainure circonférentielle dans la broche est prévue pour permettre à la broche de tourner sur son axe longitudinal quand la partie annulaire du ressort est bloquée en place dans ladite rainure.

7. Chariot selon l'une quelconque des revendications 1 à 6, **caractérisé en ce que** lesdits premiers moyens de fixation (12) sont fixés à la partie verticale (6) du cadre (5).

8. Chariot selon la revendication 7, **caractérisé en ce que** le manchon métallique (15) des premiers moyens de fixation (12) est fixé sur l'intérieur du cadre (5), sur la partie verticale (6) de celui-ci.

9. Chariot selon la revendication 8, **caractérisé en ce que** ledit manchon est fixé dans une ouverture dans la partie verticale du cadre du chariot.

10. Chariot selon la revendication 9, **caractérisé en ce que** ledit manchon est vissé, soudé, plié ou riveté dans ladite ouverture.

11. Chariot selon l'une quelconque des revendications 7 à 10, **caractérisé en ce que** lesdits deuxièmes moyens de fixation (20) peuvent être bloqués dans lesdits premiers moyens de fixation (12) à travers une ouverture (14) dans le bord plié vers le bas de la toile (4) de toit pour arrimer la toile (4) de toit.

12. Chariot selon l'une quelconque des revendications 1 à 6, **caractérisé en ce que** la broche métallique (20) desdits deuxièmes moyens de fixation est fixée à la partie verticale (6) du cadre (5).

13. Chariot selon la revendication 12, **caractérisé en ce que** ladite broche métallique (20) est fixée dans une ouverture dans la partie verticale (6) du cadre (5) du chariot.

14. Chariot selon la revendication 13, **caractérisé en ce que** ladite broche métallique (20) est vissée, soudée, pliée ou rivetée dans ladite ouverture.
